# EUROPEAN PATENT SPECIFICATION

(11) **EP 2 991 319 B1**
(45) Date of publication and mention of the grant of the patent: **16.05.2018**
(21) Application number: 15175079.1
(22) Date of filing: 02.07.2015
(51) Int. Cl.: H04L 29/08

(54) **METHOD AND DEVICE FOR ROUTER-BASED NETWORKING CONTROL**
VERFAHREN UND VORRICHTUNG ZUR ROUTERBASIERTEN NETZWERKSTEUERUNG
PROCÉDÉ ET DISPOSITIF DE COMMANDE DE RÉSEAU BASÉ SUR DES ROUTEURS

(30) Priority: 29.08.2014 CN 201410438588
(43) Date of publication of application: 02.03.2016
(73) Proprietor: Xiaomi Inc., Beijing 100085 (CN)
(72) Inventor: LI, Zheng, 100085 Haidian District (CN); LIU, Tiejun, 100085 Haidian District (CN); CHENG, Liang, 100085 Haidian District (CN)
(74) Representative: Sadler, Peter Frederick

(56) References cited:
- WO-A1-02/103547

## Description

### TECHNICAL FIELD

The present disclosure relates to the technical field of routers, and more particularly, to a method and a device for router-based networking control.

### BACKGROUND

A router is a device that connects local area networks (LANs) and wide area networks (WANs). A plurality of terminal devices connected with the router can access the internet through the router.

In related art, the router receives an internet access request sent by the terminal device, and then sends the internet access request to a corresponding web server; afterwards, the router receives webpage data returned by the server, and returns the webpage data to the terminal device; in this way, the terminal device may open the requested webpage. However, the router only plays a simple role of forwarding, but cannot provide the user with more quantity of information.

International application published with number WO 02/103547 describes a router that can determine MAC addresses, identify unregistered MAC addresses and forward a HTTP request by an unregistered user to a remote configuration web page for registering the user, or to a security warning web page. There is no mechanism for providing information to a user in a one-shot manner.

### SUMMARY OF THE INVENTION

The invention is defined in the independent claims to which reference is now directed. Preferred features are set out in the dependent claims.

In order to overcome the problem in the related art that the router cannot be sufficiently used to provide the user with more quantity of information, the present disclosure provides a method and a device for router-based networking control.

In order to solve the foregoing technical problem, embodiments of the present disclosure disclose the following technical solutions.

According to a first aspect of embodiments of the present disclosure, there is provided a method for router-based networking control, including:
acquiring a HTTP (Hypertext Transfer Protocol) request sent from a terminal, the HTTP request at least including identity information of the terminal;
determining whether the terminal accesses a webpage through a router for the first time according to the identity information of the terminal; and
if the terminal accesses the webpage through the router for the first time, returning a HTTP response message including a URL (Uniform Resource Locator) address of the webpage to the terminal so that the terminal skips or redirects to the designated webpage according to the HTTP response message.

The determining whether the terminal accesses the webpage through the router for the first time according to the identity information of the terminal includes:
determining whether a passable/allowable terminal list includes the identity information of the terminal, if the passable terminal list does not include the identity information of the terminal, determining that the terminal accesses the webpage through the router for the first time; and if the passable terminal list includes the identity information of the terminal, determining that the terminal does not access the webpage through the router for the first time; wherein the passable terminal list includes the identity information of all the terminals that have been connected with the router.

If the terminal accesses the webpage through the router for the first time, the method further includes:
saving the identity information of the terminal in the passable terminal list.

In combination with to the first aspect, in a first possible implementation manner of the first aspect, the acquiring the HTTP request sent by the terminal includes:
receiving a TCP (Transmission control Protocol) protocol packet sent by the terminal;
determining whether the TCP protocol packet is a HTTP request;
if the TCP protocol packet is a HTTP request, obtaining the HTTP request; and
if the TCP protocol packet is not a HTTP request, forwarding the TCP protocol packet to a corresponding server.

In combination with the first aspect and optionally the first possible implementation manner of the first aspect, in a second possible implementation manner of the first aspect, the method further includes:
if the terminal does not access the webpage through the router for the first time, forwarding the HTTP request to a corresponding web server.

According to a second aspect of embodiments of the present disclosure, there is provided a device for router-based networking control, including:
an acquisition unit configured to acquire a HTTP (hypertext transfer protocol) request sent by a terminal, the HTTP request at least including identity information of the terminal;
a first determining unit configured to determine whether the terminal accesses a webpage through a router for the first time according to the identity information of the terminal acquired by the acquisition unit; and
a returning unit configured to, if the first determining unit determines that the terminal accesses the webpage through the router for the first time, return a HTTP response message including a URL (Uniform Resource Locator) address of the webpage to the terminal so that the terminal skips to the designated webpage according to the HTTP response message.

The determining unit includes:
a first determining subunit configured to determine whether a passable terminal list includes the identity information of the terminal, the passable terminal list including the identity information of all the terminals that have been connected with the router;
a first determination subunit configured to, if the first determining subunit determines that the passable terminal list does not include the identity information of the terminal, determine that the terminal accesses the webpage through the router for the first time; and
a second determination subunit configured to, if the first determining subunit determines that the passable terminal list includes the identity information of the terminal, determine that the terminal does not access the webpage through the router for the first time.

The device further includes:
a saving unit configured to, if the first determining unit determines that the terminal accesses the webpage through the router for the first time, save the identity information of the terminal in the passable terminal list.

In combination with the second aspect, in a first possible implementation manner of the second aspect, the acquisition unit includes:
a receiving subunit configured to receive a TCP (Transmission control Protocol) protocol packet sent by the terminal;
a second determining subunit configured to determine whether the TCP protocol packet received by the receiving subunit is a HTTP request;
a second acquisition subunit configured to, if the second determining subunit determines that the TCP protocol packet is a HTTP request, obtain the HTTP request; and
a forwarding subunit configured to, if the second determining subunit determines that the TCP protocol packet is not a HTTP request, forward the TCP protocol packet to a corresponding server.

In combination with the second aspect, in a second possible implementation manner of the second aspect, the device further includes:
a forwarding unit configured to forward the HTTP request to a corresponding web server if the first determining unit determines that the terminal does not access the webpage through the router for the first time.

The present invention also provides a computer program, which when executing on a processor of a router, performs the above method.

The technical solutions provided by the embodiments of the present disclosure may include the following advantageous effects: according to the method for router-based networking control, after acquiring the HTTP request sent by the terminal, whether the terminal accesses the webpage through the router for the first time is determined according to the identity information of the terminal included in the HTTP request, and if the terminal accesses the webpage through the router for the first time, the HTTP response message including the URL address of the designated webpage is returned to the terminal. Thereby, the terminal skips to the designated webpage corresponding to the URL address according to the HTTP response message, and may display the designated display information to the user on the designated webpage, thus implementing an object of providing various information to the user.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for router-based networking control, according to an exemplary embodiment.
Fig. 2 is a flow chart showing another method for router-based networking control, according to an exemplary embodiment.
Fig. 3 is a flow chart showing still another method for router-based networking control, according to an exemplary embodiment.
Fig. 4 is a block diagram showing a device for router-based networking control, according to an exemplary embodiment.
Fig. 5 is a block diagram showing an acquisition unit, according to an exemplary embodiment.
Fig. 6 is a block diagram showing a first determining unit, according to an exemplary embodiment.
Fig. 7 is a block diagram showing another device for router-based networking control, according to an exemplary embodiment.
Fig. 8 is a block diagram showing still another device for router-based networking control, according to an exemplary embodiment.
Fig. 9 is a block diagram showing a device, according to an exemplary embodiment.

Specific embodiments of the present disclosure have been shown through the accompanying drawings above, and will be described in detail hereinafter. The accompanying drawings are not intended to limit the scope of the conception of the present disclosure through any manner, but to explain the concept of the present disclosure for those skilled in the art with reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

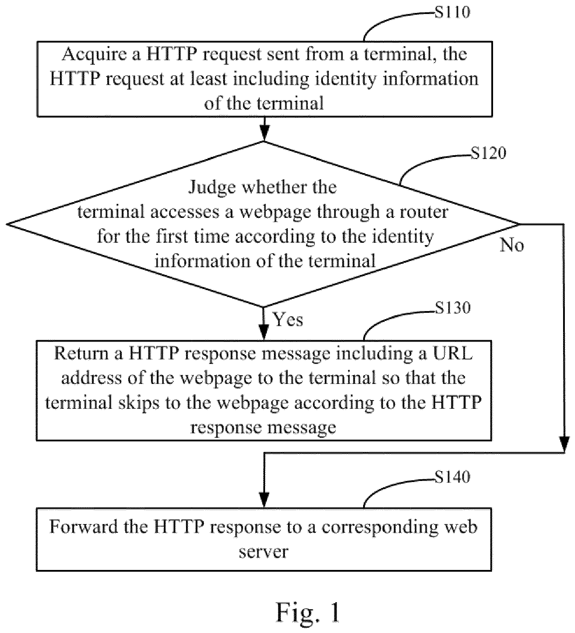

Fig. 1 is a flow chart showing a method for router-based networking control, according to an exemplary embodiment. As shown in Fig. 1, the method is used in a router, and includes the following steps.

In step S110, a HTTP (Hypertext Transfer Protocol) request sent by a terminal is acquired, the HTTP request at least including identity information of the terminal.

When the terminal is connected with the internet through a router, the terminal needs to forward an internet access request through the router. The internet access request includes multiple types of requests. When the terminal accesses a web server through the router, the terminal sends a HTTP request to the web server through the router, and the router needs to determine whether the internet access request sent by the terminal is a HTTP request.

A header of the HTTP request includes information of the terminal, for example, such information as a MAC (Medium Access Control) address and an IP address of the terminal. Whether the terminal accesses the webpage through the router for the first time is determined according to the information of the terminal.

When the terminal connects with the internet through the router, a TCP connection between the terminal and the web server is established firstly. At this time, the terminal sends a TCP protocol packet to the server through the router. After receiving the TCP protocol packet, the router firstly determines whether the TCP protocol packet is a HTTP request; if the TCP protocol packet is a HTTP request, the router intercepts the HTTP request and step S120 is performed.

In step S120, whether the terminal accesses the webpage through the router for the first time is determined according to the identity information of the terminal. If the terminal accesses the webpage through the router for the first time, then step S130 is performed. If the terminal does not access the webpage through the router for the first time, then step S140 is performed.

In accordance with the invention, whether the terminal accesses the webpage through the router for the first time is determined through the following procedures.
1) The identity information of the terminal, for example, a MAC address, is acquired from the HTTP request.
2) Whether a passable terminal list includes the identity information of the terminal is determined. If the passable terminal list does not include the identity information of the terminal, the terminal is determined to access the webpage through the router for the first time; and if the passable terminal list includes the identity information of the terminal, the terminal is determined to not access the webpage through the router for the first time, wherein the passable terminal list includes the identity information of all the terminals that have accessed the webpage through the router.

When the terminal accesses the webpage through the router for the first time, in step S130, a HTTP response message including a URL address of the designated webpage is returned to the terminal so that the terminal skips to the designated webpage according to the HTTP response message.

When the terminal does not access the webpage through the router for the first time, in step S140, the HTTP request is forwarded to a corresponding web server.

According to the method for router-based networking control provided by the embodiment, after acquiring the HTTP request sent by the terminal, whether the terminal accesses the webpage through the router for the first time according to the identity information of the terminal included in the HTTP request is determined, and if the terminal accesses the webpage through the router for the first time, the HTTP response message including the URL address of the designated webpage is returned to the terminal. Thereby, the terminal skips to the designated webpage corresponding to the URL address according to the HTTP response message, and may display the designated display information to the user on the designated webpage, thus implementing an object of providing various information to the user.

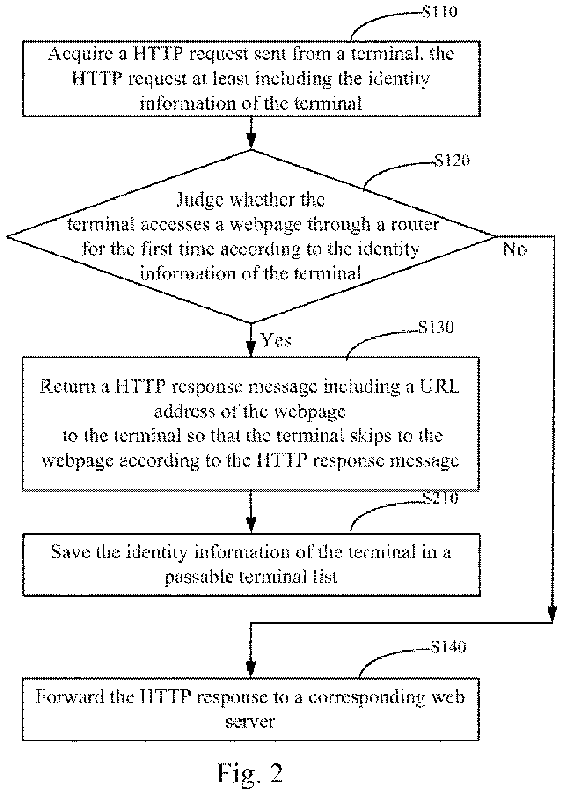

Fig. 2 is a flow chart showing another method for router-based networking control, according to an exemplary embodiment. As shown in Fig. 2, the method is added with a step S210 on the basis of the embodiment as shown in Fig. 1, and other steps S110 to S140 are identical to those as shown in Fig. 1, which will not be elaborated herein.

If the terminal is determined to access the webpage through the router for the first time in step S120, then the identity information of the terminal is saved in the passable terminal list in step S210.

Certainly, in other embodiments of the present disclosure, the terminal not accessing the webpage through the router for the first time may be marked through other manners, for example, recording the identity information included in the HTTP request that can uniquely indicate the terminal.

When the terminal accesses the webpage through the router again, the router looks up the passable terminal list and finds that the passable terminal list includes the identity information of the terminal, and then determines that the terminal does not access the webpage through the router for the first time, so that only when the terminal accesses the webpage through the router for the first time, the terminal skips to the designated webpage, and if the terminal accesses the webpage later, the terminal will directly access the requested webpage rather than skip to the designated webpage.

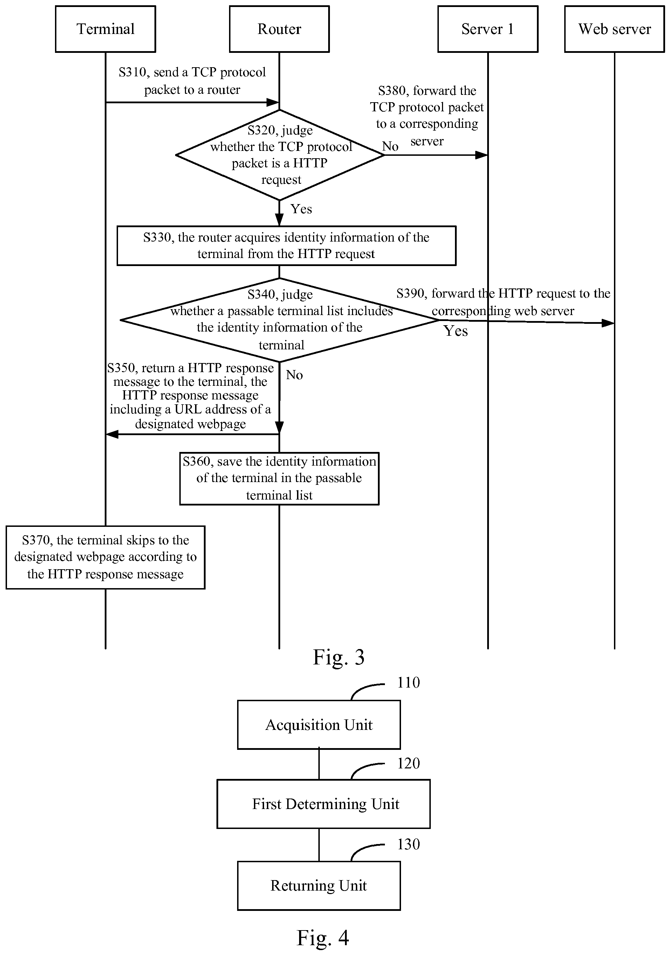

Fig. 3 is a flow chart showing another method for router-based networking control, according to an exemplary embodiment. As shown in Fig. 3, the method includes the following steps.

In step S310, a terminal sends a TCP protocol packet to a router.

In step S320, the router determines whether the TCP protocol packet is a HTTP request; if the TCP protocol packet is a HTTP request, then step S330 is performed; and if the TCP protocol packet is not a HTTP request, then step S380 is performed.

In step S330, the router acquires identity information of the terminal from the HTTP request.

In step S340, the router determines whether a passable terminal list includes the identity information of the terminal, the passable terminal list including the identity information of all the terminals that have accessed a webpage through the router.

If the passable terminal list does not include the identity information of the terminal, then step S350 is performed. Otherwise, step S390 is performed.

For example, the TCP sent by the terminal to the router is to request for accessing a webpage corresponding to a ULR-A address, then the router determines that the TCP protocol packet is a HTTP request, and acquires the MAC address of the terminal as MAC-A from the HTTP request. The router looks up whether the MAC-A is included in the passable terminal list; if the passable terminal list includes the MAC-A, then it indicates that the terminal does not access a web server through the router for the first time; and if the passable terminal list does not include the MAC-A, then it indicates that the terminal accesses the web server through the router for the first time.

In step S350, the router returns a HTTP response message to the terminal, the HTTP response message including a URL address of the designated webpage.

If the terminal accesses the web server through the router for the first time, then in step S360, the identity information of the terminal is saved in the passable terminal list.

In step S370, the terminal skips to the designated webpage according to the HTTP response message.

If the TCP protocol packet is not a HTTP request, then in step S380, the TCP protocol packet is forwarded to a corresponding server (server 1 in Fig. 3).

If the passable terminal list includes the identity information of the terminal, then in step S390, the HTTP request is forwarded to a corresponding web server.

Fig. 4 is a block diagram showing a device for router-based networking control, according to an exemplary embodiment. As shown in Fig. 4, the device includes: an acquisition unit 110, a first determining unit 120 and a returning unit 130.

The acquisition unit 110 is configured to acquire a HTTP request sent by a terminal, the HTTP request at least including identity information of the terminal.

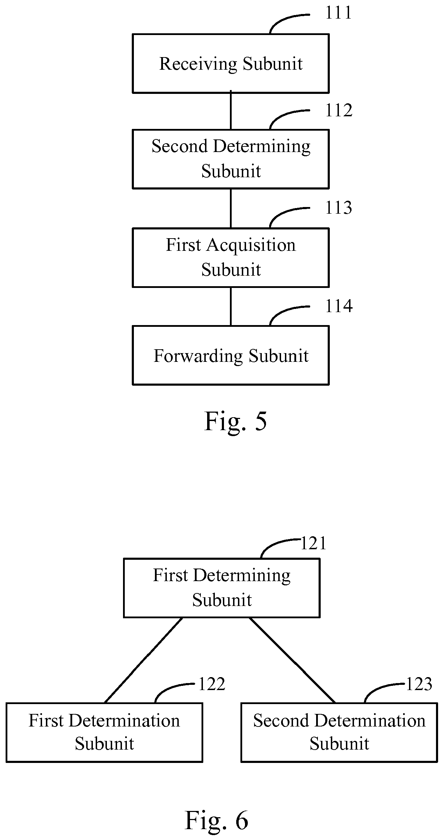

In an exemplary embodiment of the present disclosure, as shown in Fig. 5, the acquisition unit 110 includes a receiving subunit 111, a second determining subunit 112 and a first acquisition subunit 113.

The receiving subunit 111 is configured to receive a TCP (Transmission control Protocol) protocol packet sent by the terminal.

The second determining subunit 112 is configured to determine whether the TCP protocol packet received by the receiving subunit 111 is a HTTP request.

The first acquisition subunit 113 is configured to obtain the HTTP request if the second determining subunit 112 determines that the TCP protocol packet is a HTTP request.

Optionally, the acquisition unit 110 may also include: a forwarding subunit 114.

The forwarding subunit 114 is configured to forward the TCP protocol packet to a corresponding server when the second determining subunit 112 determines that the TCP protocol packet is not a HTTP request.

The first determining unit 120 is configured to determine whether the terminal accesses the webpage through the router for the first time according to the identity information of the terminal acquired by the acquisition unit 110.

In an exemplary embodiment of the present disclosure, as shown in Fig. 6, the first determining unit 120 may include: a first determining subunit 121, a first determination subunit 122 and a second determination subunit 123.

The first determining subunit 121 is configured to determine whether a passable terminal list includes the identity information of the terminal acquired by the acquisition unit 110, the passable terminal list including the identity information of all the terminals that have accessed a webpage through the router.

The first determination subunit 122 is configured to determine that the terminal accesses the webpage through the router for the first time when the first determining subunit 121 determines that the passable terminal list does not include the identity information of the terminal.

The second determination subunit 123 is configured to determine that the terminal does not access the webpage through the router for the first time when the first determining subunit 121 determines that the passable terminal list includes the identity information of the terminal.

The returning unit 130 is configured to, when the first determining unit 120 determines that the terminal accesses the webpage through the router for the first time, return a HTTP response message including a URL address of the designated webpage to the terminal so that the terminal skips to the designated webpage according to the HTTP response message.

The device for router-based networking control provided by the embodiment firstly acquires the HTTP request sent by the terminal through the acquisition unit, then determines whether the terminal accesses the webpage through the router for the first time according to the identity information of the terminal included in the HTTP request by the determining unit, and if the terminal accesses the webpage through the router for the first time, the HTTP response message including the URL address of the designated webpage is returned to the terminal. Thereby, the terminal skips to the designated webpage corresponding to the URL address according to the HTTP response message, and may display the designated display information to the user on the designated webpage, thus implementing an object of providing various information to the user.

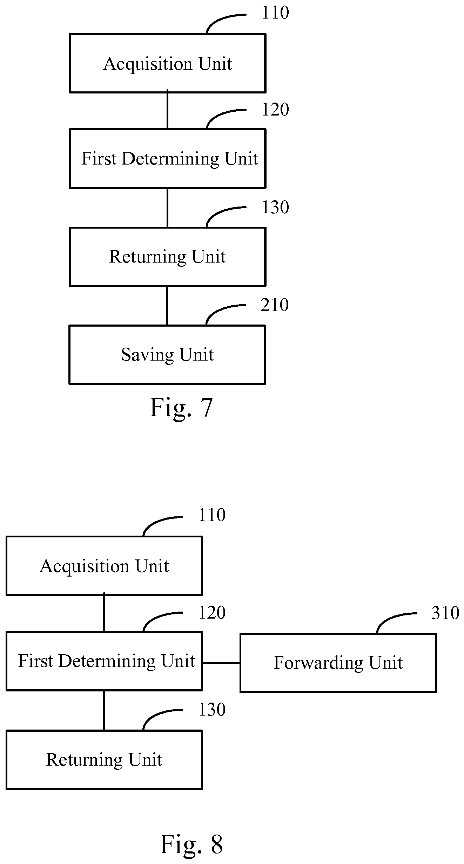

Fig. 7 is a block diagram showing another device for router-based networking control, according to an exemplary embodiment. As shown in Fig. 7, on the basis of the embodiment as shown in Fig. 4, the device in this embodiment further includes: a saving unit 210.

If the first determining unit 120 determines that the terminal accesses the webpage through the router for the first time, then the saving unit 210 is configured to save the identity information of the terminal in the passable terminal list. The passable terminal list includes the identity information of all the terminals that have accessed a webpage through the router.

When the terminal accesses the webpage through the router again, the router looks up the passable terminal list and found that the passable terminal list includes the identity information of the terminal, then determines that the terminal does not access the webpage through the router for the first time, so that only when the terminal accesses the webpage through the router for the first time, the terminal skips to the designated webpage, and if the terminal accesses the webpage later, the terminal will directly access the requested webpage, rather than skip to the designated webpage.

Fig. 8 is a block diagram showing another device for router-based networking control, according to an exemplary embodiment. As shown in Fig. 8, on the basis of the embodiment as shown in Fig. 4, the device in this embodiment further includes: a forwarding unit 310.

The forwarding unit 310 is configured to, when the first determining unit 120 determines that the terminal does not access the webpage through the router for the first time, forwards the HTTP request to a corresponding web server.

With respect to the devices in the above embodiments, the specific manners for performing operations for individual modules therein have been described in detail in the embodiments regarding the methods, which will not be elaborated herein.

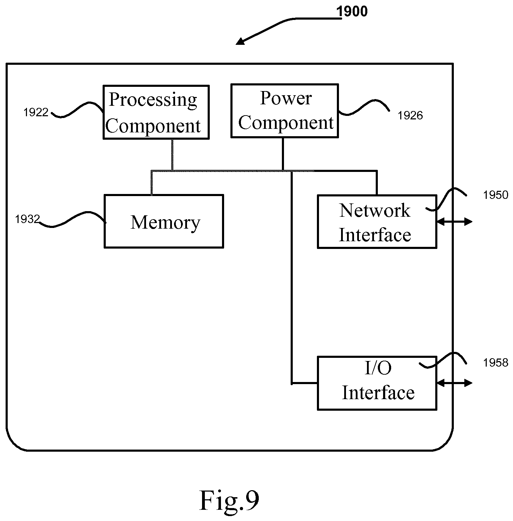

Fig. 9 is a block diagram showing a device 1900 for router-based networking control, according to an exemplary embodiment. For example, the device 1900 may be provided as a server. Referring to Fig. 9, the device 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the above method.

The device 1900 may also include a power component 1926 configured to perform power management of the device 1900, wired or wireless network interface(s) 1950 configured to connect the device 1900 to a network, and an input/output (I/O) interface 1958. The device 1900 may operate based on an operating system stored in the memory 1932, such as Windows ServerTM, Mac OS XTM, UnixTM, LinuxTM, FreeBSDTM, or the like.

In exemplary embodiments, there is also provided a non-transitory computer-readable storage medium including instructions, such as included in the memory 1932, executable by the processor 1922 in the device 1900, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when an instruction in a storage medium is performed by a processing component of a device, enables the device to perform a method for router-based networking control, wherein the method includes:
acquiring a HTTP request sent by a terminal, the HTTP request at least including identity information of the terminal;
determining whether the terminal accesses a webpage through a router for the first time according to the identity information of the terminal; and
if the terminal accesses the webpage through the router for the first time, returning a HTTP response message including a URL address of the designated webpage to the terminal so that the terminal skips to the designated webpage according to the HTTP response message.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with the scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for router-based networking control, wherein the method comprises, at a router:
acquiring (S110) a Hypertext Transfer Protocol, HTTP, request sent from a terminal, the HTTP request at least comprising identity information of the terminal;
determining (S120) whether the terminal is accessing a webpage through the router for the first time according to the identity information of the terminal; and
if the terminal is accessing the webpage through the router for the first time, returning (S130) a HTTP response message comprising a Uniform Resource Locator, URL, address of a designated webpage, different to the webpage associated with the HTTP request sent from the terminal, to the terminal so that the terminal skips to the webpage according to the HTTP response message;
wherein the determining whether the terminal is accessing the webpage through the router for the first time according to the identity information of the terminal comprises:
determining whether an allowable terminal list comprises the identity information of the terminal; wherein
if the allowable terminal list does not comprise the identity information of the terminal, determining that the terminal is accessing a webpage through the router for the first time; and
if the allowable terminal list comprises the identity information of the terminal, determining that the terminal is not accessing a webpage through the router for the first time;
wherein the allowable terminal list comprises the identity information of all the terminals that have been connected with the router; and wherein if the terminal is accessing a webpage through the router for the first time, the method further comprises:
saving the identity information of the terminal in the allowable terminal list.

2. The method according to claim 1, wherein the acquiring the HTTP request sent from the terminal comprises:
receiving a Transmission control Protocol, TCP, protocol packet sent from the terminal;
determining whether the TCP protocol packet is a HTTP request;
if the TCP protocol packet is a HTTP request, obtaining the HTTP request; and
if the TCP protocol packet is not a HTTP request, forwarding the TCP protocol packet to a corresponding server.

3. The method according to any one of claims 1 or 2, wherein the method further comprises:
if the terminal is not accessing a webpage through the router for the first time, forwarding the HTTP request to a corresponding web server.

4. A device for router-based networking control, wherein the device comprises:
an acquisition unit (110) configured to acquire a Hypertext Transfer Protocol, HTTP, request sent by a terminal, the HTTP request at least comprising identity information of the terminal;
a first determining unit (120) configured to determine whether the terminal is accessing a webpage through a router for the first time according to the identity information of the terminal acquired by the acquisition unit; and
a returning unit (130) configured to, if the first determining unit determines that the terminal is accessing a webpage through the router for the first time, return a HTTP response message comprising a Uniform Resource Locator, URL, address of a designated webpage, different to the webpage associated with the HTTP request sent from the terminal, to the terminal so that the terminal skips to the webpage according to the HTTP response message; wherein the determining unit comprises:
a first determining subunit configured to determine whether an allowable terminal list comprises the identity information of the terminal, the allowable terminal list comprising the identity information of all the terminals that have been connected with the router;
a first determination subunit configured to determine that the terminal is accessing a webpage through the router for the first time if the first determining subunit determines that the allowable terminal list does not comprise the identity information of the terminal; and
a second determination subunit configured to determine that the terminal is not accessing a webpage through the router for the first time if the first determining subunit determines that the allowable terminal list comprises the identity information of the terminal;
wherein the device further comprises:
a saving unit configured to, if the first determining unit determines that the terminal is accessing a webpage through the router for the first time, save the identity information of the terminal in the allowable terminal list.

5. The device according to claim 4, wherein the acquisition unit comprises:
a receiving subunit configured to receive a Transmission control Protocol, TCP, protocol packet sent by the terminal;
a second determining subunit configured to determine whether the TCP protocol packet received by the receiving subunit is a HTTP request;
a second acquisition subunit configured to, if the second determining subunit determines that the TCP protocol packet is a HTTP request, obtain the HTTP request; and
a forwarding subunit configured to, if the second determining subunit determines that the TCP protocol packet is not a HTTP request, forward the TCP protocol packet to a corresponding server.

6. The device according to any of claims 4 or 5, wherein the device further comprises:
a forwarding unit configured to, if the first determining unit determines that the terminal is not accessing a webpage through the router for the first time, forward the HTTP request to a corresponding web server.

7. A computer program, which when executing on a processor of a router, performs the method according to any one of claims 1 to 3.

## Patentansprüche

1. Verfahren für Router-basierte Vernetzungssteuerung, wobei das Verfahren an einem Router Folgendes beinhaltet:
Erfassen (S110) einer von einem Endgerät gesendeten HTTP-(Hypertext Transfer Protocol)-Anforderung, wobei die HTTP-Anforderung wenigstens Identitätsinformationen über das Endgerät umfasst;
Feststellen (S120), ob das Endgerät zum ersten Mal auf eine Webseite durch den Router gemäß den Identitätsinformationen über das Endgerät zugreift; und
Zurücksenden (S130), wenn das Endgerät zum ersten Mal auf die Webseite durch den Router zugreift, einer HTTP-Antwortnachricht, die eine URL-(Uniform Resource Locator)-Adresse einer designierten Webseite umfasst, die sich von der Webseite unterscheidet, die mit der vom Endgerät gesendeten HTTP-Anforderung assoziiert ist, zum Endgerät, so dass das Endgerät zu der Webseite gemäß der HTTP-Antwortnachricht springt;
wobei das Feststellen, ob das Endgerät zum ersten Mal auf die Webseite durch den Router gemäß den Identitätsinformationen über das Endgerät zugreift, Folgendes beinhaltet:
Feststellen, ob eine Zulässige-Endgeräte-Liste die Identitätsinformationen über das Endgerät umfasst; dabei
Feststellen, wenn die Zulässige-Endgeräte-Liste die Identitätsinformationen über das Endgerät nicht umfasst, dass das Endgerät zum ersten Mal auf eine Webseite durch den Router zugreift; und
Feststellen, wenn die Zulässige-Endgeräte-Liste die Identitätsinformationen über das Endgerät umfasst, dass das Endgerät nicht zum ersten Mal auf eine Webseite durch den Router zugreift;
wobei die Zulässige-Endgeräte-Liste die Identitätsinformationen über alle Endgeräte umfasst, die mit dem Router verbunden wurden; und wobei, wenn das Endgerät zum ersten Mal auf eine Webseite durch den Router zugreift, das Verfahren ferner Folgendes beinhaltet:
Speichern der Identitätsinformationen über das Endgerät in der Zulässige-Endgeräte-Liste.

2. Verfahren nach Anspruch 1, wobei das Erfassen der von dem Endgerät gesendeten HTTP-Anforderung Folgendes beinhaltet:
Empfangen eines vom Endgerät gesendeten TCP-(Transmission Control Protocol)-Pakets;
Feststellen, ob das TCP-Protokollpaket eine HTTP-Anforderung ist;
Einholen, wenn das TCP-Protokollpaket eine HTTP-Anforderung ist, der HTTP-Anforderung; und
Weiterleiten, wenn das TCP-Protokollpaket keine HTTP-Anforderung ist, des TCP-Protokollpakets zu einem entsprechenden Server.

3. Verfahren nach Anspruch 1 oder 2, wobei das Verfahren ferner Folgendes beinhaltet:
Weiterleiten, wenn das Endgerät nicht zum ersten Mal auf eine Webseite durch den Router zugreift, der HTTP-Anforderung zu einem entsprechenden Webserver.

4. Gerät für routerbasierte Vernetzungssteuerung, wobei das Gerät Folgendes umfasst:
eine Erfassungseinheit (110), konfiguriert zum Erfassen einer von einem Endgerät gesendeten HTTP-(Hypertext Transfer Protocol)-Anforderung, wobei die HTTP-Anforderung wenigstens Identitätsinformationen über das Endgerät umfasst;
eine erste Feststellungseinheit (120), konfiguriert zum Feststellen, ob das Endgerät zum ersten Mal auf eine Webseite durch einen Router gemäß den Identitätsinformationen über das Endgerät wie von der Erfassungseinheit erfasst zugreift; und
eine Rücksendeeinheit (130), konfiguriert zum Zurücksenden, wenn die erste Feststellungseinheit feststellt, dass das Endgerät zum ersten Mal auf eine Webseite durch den Router zugreift, einer HTTP-Antwortnachricht, die eine URL-(Uniform Resource Locator)-Adresse einer designierten Webseite umfasst, die sich von der Webseite unterscheidet, die mit der vom Endgerät gesendeten HTTP-Anforderung assoziiert ist, zu dem Endgerät, so dass das Endgerät zur Webseite gemäß der HTTP-Antwortnachricht springt; wobei die Feststellungseinheit Folgendes umfasst:
eine erste Feststellungssubeinheit, konfiguriert zum Feststellen, ob eine Zulässige-Endgeräte-Liste die Identitätsinformationen über das Endgerät umfasst, wobei die Zulässige-Endgeräte-Liste die Identitätsinformationen über alle Endgeräte umfasst, die mit dem Router verbunden wurden;
eine erste Feststellungssubeinheit, konfiguriert zum Feststellen, dass das Endgerät zum ersten Mal auf eine Webseite durch den Router zugreift, wenn die erste Feststellungssubeinheit feststellt, dass die Zulässige-Endgeräte-Liste die Identitätsinformationen über das Endgerät nicht umfasst; und
eine zweite Feststellungssubeinheit, konfiguriert zum Feststellen, dass das Endgerät nicht zum ersten Mal auf eine Webseite durch den Router zugreift, wenn die erste Feststellungssubeinheit feststellt, dass die Zulässige-Endgeräte-Liste die Identitätsinformationen über das Endgerät umfasst;
wobei das Gerät ferner Folgendes umfasst:
eine Speichereinheit, konfiguriert zum Speichern, wenn die erste Feststellungseinheit feststellt, dass das Endgerät zum ersten Mal auf eine Webseite durch den Router zugreift, der Identitätsinformationen über das Endgerät in der Zulässige-Endgeräte-Liste.

5. Gerät nach Anspruch 4, wobei die Erfassungseinheit Folgendes umfasst:
eine Empfangssubeinheit, konfiguriert zum Empfangen eines von dem Endgerät gesendeten TCP-(Transmission Control Protocol)-Protokollpakets;
eine zweite Feststellungssubeinheit, konfiguriert zum Feststellen, ob das von der Empfangssubeinheit empfangene TCP-Protokollpaket eine HTTP-Anforderung ist;
eine zweite Erfassungssubeinheit, konfiguriert zum Einholen, wenn die zweite Feststellungssubeinheit feststellt, dass das TCP-Protokollpaket eine HTTP-Anforderung ist, der HTTP-Anforderung; und
eine Weiterleitungssubeinheit, konfiguriert zum Weiterleiten, wenn die zweite Feststellungssubeinheit feststellt, dass das TCP-Protokollpaket keine HTTP-Anforderung ist, des TCP-Protokollpakets zu einem entsprechenden Server.

6. Gerät nach Anspruch 4 oder 5, wobei das Gerät ferner Folgendes umfasst:
eine Weiterleitungseinheit, konfiguriert zum Weiterleiten, wenn die erste Feststellungseinheit feststellt, dass das Endgerät nicht zum ersten Mal auf eine Webseite durch den Router zugreift, der HTTP-Anforderung zu einem entsprechenden Webserver.

7. Computerprogramm, das bei Ausführung auf einem Prozessor eines Routers das Verfahren nach einem der Ansprüche 1 bis 3 durchführt.

## Revendications

1. Procédé de contrôle de réseau à base de serveur, où le procédé comprend, à un routeur :
acquérir (S110) une requête Hypertext Transfer Protocol, HTTP, envoyée d'un terminal, la requête HTTP comprenant au moins une information d'identité du terminal ;
déterminer (S120) si le terminal accède à une page Web par le routeur pour la première fois conformément à l'information d'identité du terminal ; et
si le terminal accède à la page Web par le routeur pour la première fois, renvoyer (S130) une message de réponse HTTP comprenant une adresse Uniform Resource Locator, URL, d'une page Web désignée différente de la page Web associée à la requête HTTP envoyée du terminal, au terminal de telle sorte que le terminal saute à la page Web conformément au message de réponse HTTP ;
dans lequel déterminer si le terminal accède à la page Web par le routeur pour la première fois conformément à l'information d'identité du terminal, comprend :
déterminer si une liste de terminaux admissibles comprend l'information d'identité du terminal ; où
si la liste de terminaux admissibles ne comprend pas l'information d'identité du terminal, déterminer que le terminal accède à une page Web par le routeur pour la première fois ; et
si la liste de terminaux admissibles comprend l'information d'identité du terminal, déterminer que le terminal n'accède pas à une page Web par le routeur pour la première fois ;
dans lequel la liste de terminaux admissibles comprend l'information d'identité de tous les terminaux qui ont été connectés au routeur ; et dans lequel si le terminal accède à une page Web par le routeur pour la première fois, le procédé comprend en outre :
sauvegarder l'information d'identité du terminal dans la liste de terminaux admissibles.

2. Procédé selon la revendication 1, dans lequel acquérir la requête HTTP envoyée du terminal comprend :
recevoir un paquet du protocole Transmission Control Protocol, TCP, envoyé du terminal ;
déterminer si le paquet du protocole TCP est une requête HTTP ;
si le paquet du protocole TCP est une requête HTTP, obtenir la requête HTTP ; et
si le paquet du protocole TCP n'est pas une requête HTTP, acheminer le paquet du protocole TCP à un serveur correspondant.

3. Procédé selon l'une quelconque des revendications 1 ou 2, où le procédé comprend en outre :
si le terminal n'accède pas à une page Web par le routeur pour la première fois, acheminer la requête HTTP à un serveur Web correspondant.

4. Dispositif de contrôle de réseau à base de routeur, où le dispositif comprend :
une unité d'acquisition (110) configurée pour acquérir une requête Hypertext Transfer Protocol, HTTP, envoyée par un terminal, la requête HTTP comprenant au moins une information d'identité du terminal ;
une première unité de détermination (120) configurée pour déterminer si le terminal accède à une page Web par un routeur pour la première fois conformément à l'information d'identité du terminal acquise par l'unité d'acquisition ; et
une unité de renvoi (130) configurée pour, si la première unité de détermination détermine que le terminal accède à une page Web par le routeur pour la première fois, renvoyer un message de réponse HTTP comprenant une adresse Uniform Resource Locator, URL, d'une page Web désignée différente de la page Web associée à la requête HTTP envoyée du terminal, au terminal de telle sorte que le terminal saute à la page Web conformément au message de réponse HTTP ; dans lequel l'unité de détermination comprend :
une première sous-unité de détermination configurée pour déterminer si une liste de terminaux admissibles comprend l'information d'identité du terminal ; la liste de terminaux admissibles comprenant l'information d'identité de tous les terminaux qui ont été connectés au routeur ;
une première sous-unité de détermination configurée pour déterminer que le terminal accède à une page Web par le routeur pour la première fois si la première sous-unité de détermination détermine que la liste de terminaux admissibles ne comprend pas l'information d'identité du terminal ; et
une deuxième sous-unité de détermination configurée pour déterminer que le terminal n'accède pas à une page Web par le routeur pour la première fois si la première sous-unité de détermination détermine que la liste de terminaux admissibles comprend l'information d'identité du terminal ;
où le dispositif comprend en outre :
une unité de sauvegarde configurée pour, si la première unité de détermination détermine que le terminal accède à une page Web par le routeur pour la première fois, sauvegarder l'information d'identité du terminal dans la liste de terminaux admissibles.

5. Dispositif selon la revendication 4, dans lequel l'unité d'acquisition comprend :
une sous-unité de réception configurée pour recevoir un paquet du protocole Transmission control Protocol, TCP, envoyé par le terminal ;
une deuxième sous-unité de détermination configurée pour déterminer si le paquet du protocole TCP reçu par la sous-unité de réception est une requête HTTP ;
une deuxième sous-unité d'acquisition configurée pour, si la deuxième sous-unité de détermination détermine que le paquet du protocole TCP est une requête HTTP, obtenir la requête HTTP ; et
une sous-unité d'acheminement configurée pour, si la deuxième sous-unité de détermination détermine que le paquet du protocole TCP n'est pas une requête HTTP, acheminer le paquet du protocole TCP à un serveur correspondant.

6. Dispositif selon l'une quelconque des revendications 4 ou 5, où le dispositif comprend en outre :
une unité d'acheminement configurée pour, si la première unité de détermination détermine que le terminal n'accède pas à une page Web par le routeur pour la première fois, acheminer la requête HTTP à un serveur Web correspondant.

7. Programme informatique qui, lorsque exécuté sur un processeur d'un routeur, met en oeuvre le procédé selon l'une quelconque des revendications 1 à 3.
